# EUROPEAN PATENT APPLICATION

(11) **EP 0 923 964 A1**
(43) Date of publication of application: **23.06.1999**
(21) Application number: 98310401.9
(22) Date of filing: 17.12.1998
(51) Int. Cl.: A63B 69/00, B60P 1/64

(54) **Portable climbing wall assembly**

(30) Priority: 19.12.1997 GB 9726727
(71) Applicant: Activate Outdoors Limited, Lymington, Hampshire SO41 9DB (GB)
(72) Inventor: King, Matthew John, Nr Lymington, Hampshire SO41 OHB (GB)
(74) Representative: Lomas, Geoffrey Michael

(57) **Abstract**

A portable climbing wall assembly (1) comprises a wall body (2) of tubular shape adapted to be stood on end and a plurality of external support legs (17) adapted to be connected to the upper end of the wall body (2) and to diverge downwardly and outwardly from one another. The external surface of the wall body (2) is furnished with a plurality of holds which are so arranged as to provide routes of varying degrees of difficulty up the wall.

The climbing wall assembly comprises a monocoque wall body (2) which results in a relatively light-weight construction which can be readily erected with a minimum of effort.

## Description

The present invention relates to a portable climbing wall assembly.

Static climbing walls have been built in some large halls to enable people to learn to climb. Such walls are generally provided with surface features to give holds for the hands and feet, and with bolt-on anchorages for the attachment of rope guides.

We consider that there would be advantage in providing a portable climbing wall assembly that is capable of being easily transported and erected to form a stable structure.

Since a climbing wall generally needs to be of a significant height to provide a reasonable challenge it will be appreciated that the wall itself will necessarily be heavy, even when made of relatively lightweight material, so the problems of designing a safe but portable climbing wall assembly are not inconsiderable.

A portable climbing wall assembly has been proposed which comprises a sectional wall structure supported at the rear by a scaffolding tower built up from tubular scaffolding as used by the building industry. The sectional wall structure comprises wall panels which are bolted together on site, and then have to be disconnected for transportation. The scaffolding assembly also has to be disassembled. Such an assembly is time-consuming to construct, and the scaffolding tower needs to be carefully constructed to provide a stable support.

According to one aspect of our invention we provide a portable climbing wall assembly comprising a wall body adapted to be stood on end, and a plurality of external support legs adapted to be connected to the upper end of the wall body and to diverge downwardly and outwardly from one another.

The wall body is preferably of monocoque construction.

The wall body is preferably of substantially tubular shape, preferably of elliptical transverse cross-section, but it could be of circular cross-section, tear-drop cross-section, or of polygonal cross-section, for example.

The external surface of the wall body is furnished with a plurality of holds, preferably so arranged as to provide routes of varying degrees of difficulty up the wall, and suitable anchorage's are provided for the attachment of rope guides.

The advantage of a monocoque wall body is that the absence of any substantial internal framework facilitates a relatively light-weight wall body which can be brought to an upright position with a minimum of effort. Also the body can be used to store other components during transportation of the wall body orientated in a generally horizontal attitude.

Preferably three such legs are provided and are arranged in use in a tripod configuration. The legs, however, will not generally be arranged to bear a substantial part of the weight of the wall body, which will mainly be borne by the lower end of the wall body.

Adjustable ground-engaging feet are preferably provided on the lower end of the wall body, and conveniently the adjustable feet are provided in the form of screw jacks. Conveniently, mobile-home side-winding jacks can be utilised.

The upper ends of the legs are preferably connected in use to the upper end of a column which is rigid with the upper end of the wall body.

Conveniently the wall body upper end is provided with a transverse end wall to which the column is secured.

The provision of a column enables the diverging legs to clear the upper end of the wall body. However, if desired it would be possible to connect the legs directly to the wall body at spaced apart positions at said upper end.

When a column is provided the column is preferably hollow to accommodate ropes or cables which are desirably attached to the respective legs for initially raising the legs to an operative position and preferably for retaining the legs in an operative position in use.

The upper end of each leg is preferably adapted to be received in a downwardly-facing socket of a respective leg locating means forming part of the connection with the upper end of the wall body.

When a rope or cable is associated with each leg, the rope or cable is preferably arranged to extend through a bore in the blind end of the socket, so that pulling on the rope or cable initially drags the leg upper end into the respective socket.

When a hollow column is provided, the leg locating means are provided at the upper end of the column, and the cables or ropes are preferably guided from the socket bores, conveniently by respective pulleys, to extend downwardly within the column and into the interior of the wall body.

Suitable cable/rope winch means may be employed for winding the cables/ropes for hoisting the legs into position in engagement with the sockets.

The winch means may be a winch on a vehicle such as a Land Rover™, the cables/ropes being directed out of the wall body through a suitable aperture provided therein.

According to a second aspect of the invention we provide a method of erecting a portable climbing wall assembly in accordance with the first aspect of the invention, the method comprising pivoting the wall body from a substantially horizontal position to a substantially vertical position, and then erecting the support legs by dragging with a respective rope or cable the upper end of each leg to be received in a respective socket in a leg locating means connected to the upper end of the wall body.

Preferably the lower ends of the legs are then restrained against movement over the ground by suitable leg restraining means.

The leg restraining means may comprise flexible substantially inextensible connecting means connecting the lower ends of the legs one to another, and/or extending from the lower ends of the legs to anchorages associated with the lower end of the wall body.

In a preferred embodiment the flexible connecting means are in the form of vehicle load strapping provided with ratchet tensioners as used conventionally for tensioning such load straps.

The legs are preferably made of a lightweight material such as a carbon-fibre composite and are desirably made in two lengths which are adapted to be socketed together in use. Such leg components can be stored within the wall body during transit.

According to a third aspect of the invention we provide a wheeled vehicle for transporting a portable climbing wall assembly, with an elongate wall body of the climbing wall assembly supported in a substantially horizontal orientation, the vehicle comprising a cradle to support the wall body in said substantially horizontal orientation, the cradle comprising a tippable platform adapted to support that end of the wall body which is lowermost in use of the climbing wall assembly, the vehicle comprising tipping means for causing the wall body, whilst supported on said platform, to be tipped from said substantially horizontal orientation to a substantially vertical orientation.

The wheeled vehicle is preferably a trailer for towing, preferably by a four-wheel-drive vehicle.

The tipping means could comprise an hydraulic ram or a screw jacking means, but preferably the tipping means is driven by winching a cable.

The tipping means preferably comprises a pair of control arms adapted to be releasably secured at one end of the arms to the wall body at positions of the wall body spaced from said lowermost end, and arm driving means is provided for driving the control arms relative to the chassis of the vehicle so as to tip the wall body progressively in a controlled manner to a substantially vertical position.

The control arms are preferably connected at their other ends to one or more slide bodies which are guided for longitudinal sliding movement along the vehicle chassis by means of a cable assembly which can incorporate a system of cable pulleys so arranged as to give a mechanical advantage.

A climbing wall assembly and trailer in accordance with the various aspects of the present invention will now be described, by way of example only, with reference to the accompanying drawings, in which:
**Figure 1A** is a side elevation of the climbing wall assembly in the fully assembled condition, looking in the direction of the arrow B in Figure 1B,
**Figure 1B** is a partial plan view of the fully assembled wall assembly
**Figure 2** is a vertical cross-sectional view, on an enlarged scale, taken on the line 2-2 of Figure 1B, showing the column and a socket for receiving the upper end of a first leg, the first leg to be winched into position being shown as it is being drawn towards the socket by the associated winch rope,
**Figure 3** is a schematic side elevation showing a wheeled trailer in accordance with the invention and providing superimposed views of various stages of tipping the wall body from a horizontal position to a vertical position,
**Figure 4** is a schematic vertical cross-section of the horizontal wall body mounted on the trailer assembly and taken on the line 4-4 of Figure 3, showing the tipping cradle member associated with the tipping platform but omitting the control arms,
**Figure 5** is an enlargement of a portion of Figure 3, and
**Figure 6** is a plan view of the trailer assembly to illustrate, in particular, the winching assembly used in tipping the wall body.

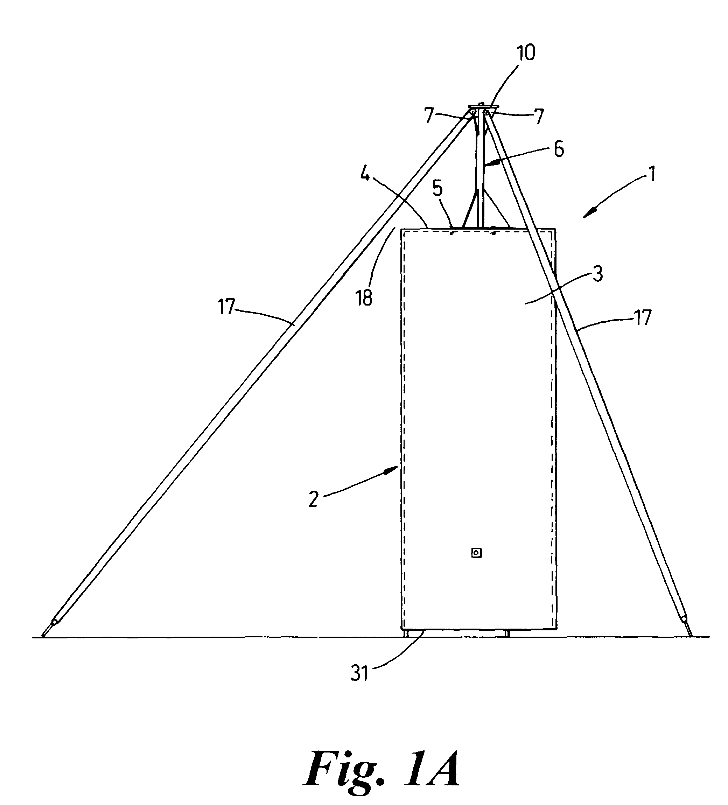

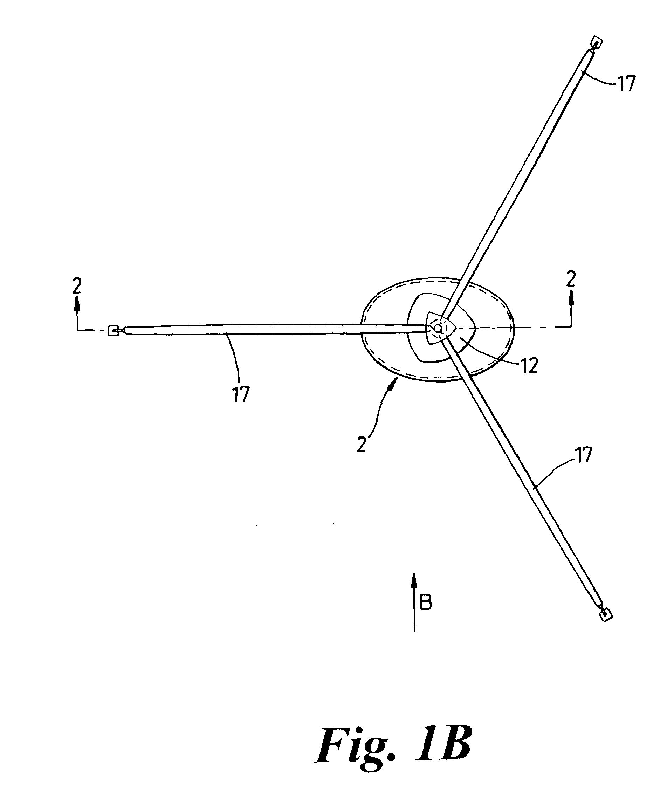

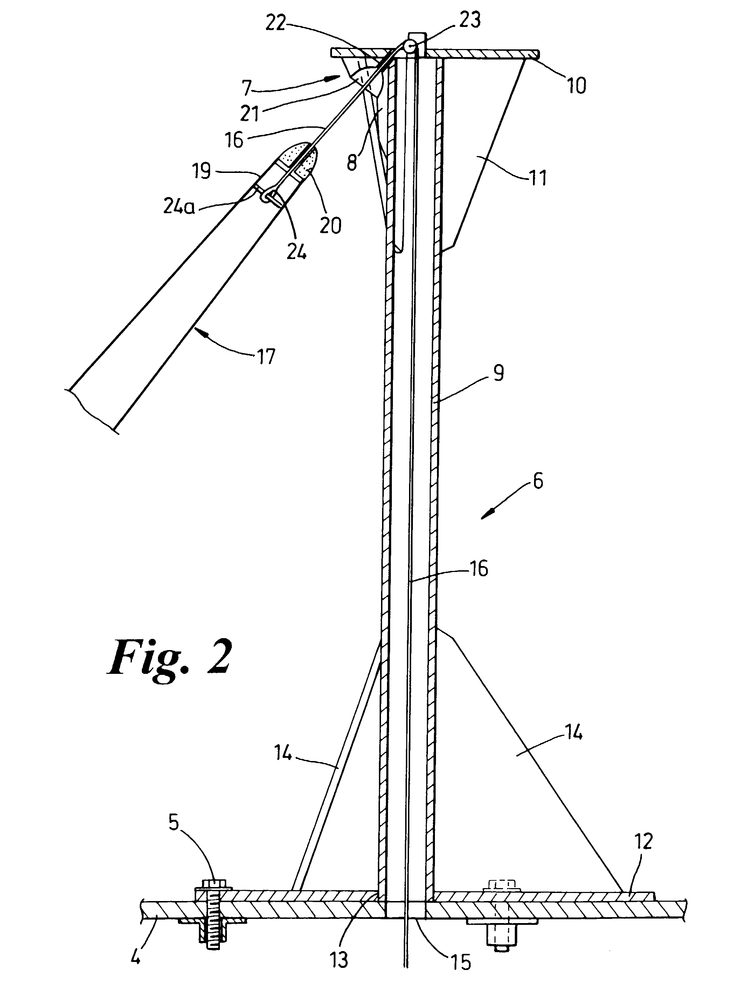

With reference to Figures 1A and 1B, the fully assembled climbing wall assembly 1 comprises a monocoque tubular wall body 2 of elliptical horizontal cross-section, the unobstructed cavity 3 defined within the body being closed at the upper end of the body by a transverse end plate 4 to which is rigidly secured by bolts 5 a column 6. Column 6 integrally supports at the upper end thereof three equi-angularly spaced leg locating means 7, shown in Figure 2, the leg locating means 7 each comprising a fillet block 8 rigid with the upper end of a tubular mast 9 of the column 6 and with a horizontal column top-plate 10, the fillet block 8 extending circumferentially about mast 9 between adjacent pairs of three equi-angularly disposed triangular bracing plates 11.

The lower end of column 6 comprises a horizontal column base plate 12 which has a central hole 13 into which is secured the lower end of mast 9, three equi-angularly disposed triangular bracing plates 14 also connecting mast 9 with base plate 12.

End plate 4 is provided with a central hole 15 in register with hole 13 to receive three leg winching ropes 16, only one shown in Figure 2 for convenience.

Three substantially equi-angularly spaced lightweight legs 17 are positioned externally of the wall body in tripod configuration, as shown in Figures 1A and 1B, and connect with the upper end of the column 6, from which they diverge downwardly and outwardly from one another.

It will be seen from Figure 1A that the column 6 provides a common connection means between the upper ends of the legs 17 and wall body 2 and enables the diverging legs 17 to clear the wall body, at 18.

The legs 17 are of tubular carbon-fibre composite construction, and each leg 17 comprises two half-lengths which have a socketed connection, not shown, secured in use by a suitable securing pin. The leg halves each taper towards their free ends, the ends remote from their socket connections, as shown in Figure 2. The free ends 19 of the upper leg sections are each formed with a rounded nose 20 which is adapted to be received within a respective downwardly and outwardly facing socket 21 formed in a respective one of the fillet blocks 8, the blocks 8 each being formed with a bore 22 co-axial with the respective socket 21 and which also extends through column top plate 10, to enable rope 16 to pass around a respective pulley 23 for guiding the rope into the bore of mast 9.

As shown in Figure 2, the end of rope 16 has an eye 24 formed by splicing, through which there is an anchoring pin 24a.

The shape of each socket 21 is such as to enable a controlled amount of pivoting of the leg nose 20 within the socket to enable tensioning of the structure by drawing the lower ends of the legs towards the wall body, as will be described hereafter, and to accommodate ground irregularities which will affect the precise positioning of the lower ends of the legs.

The column 6 is formed from a composite material.

Wall body 2 is of monocoque construction and is conveniently constructed from a composite material such as glass-fibre reinforced plastics, and need not have any internal supports. Suitable bolt-on holds, not shown, are provided on the external surface of the wall body 2 to provide climbing routes or varying degrees of difficulty. Also, suitable rope guides, not shown, are provided at various positions on the external surface.

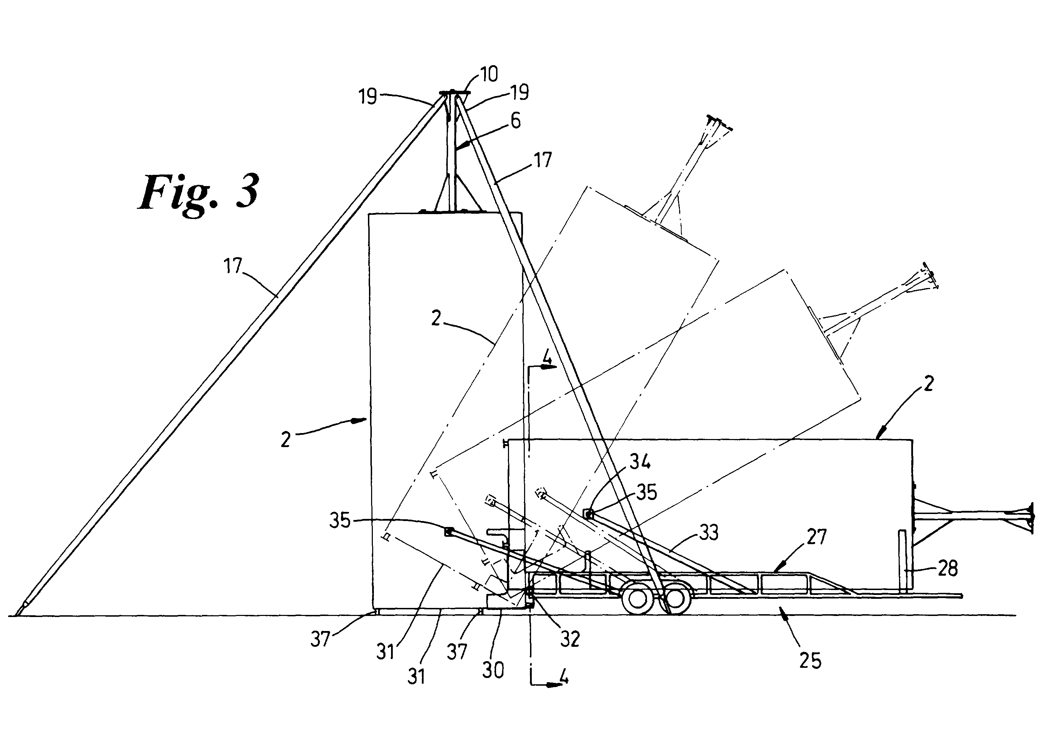

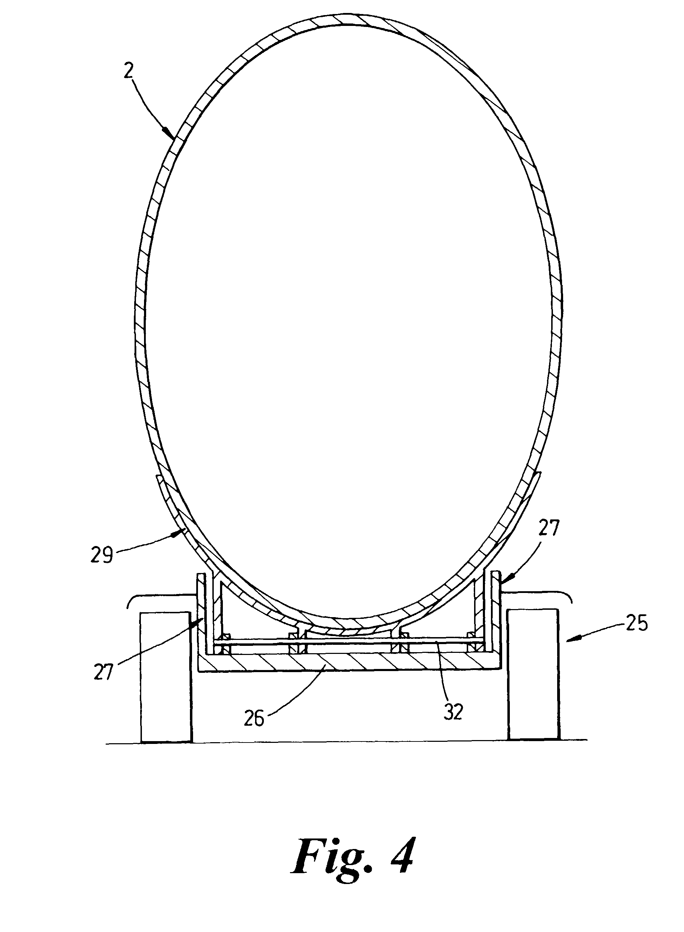

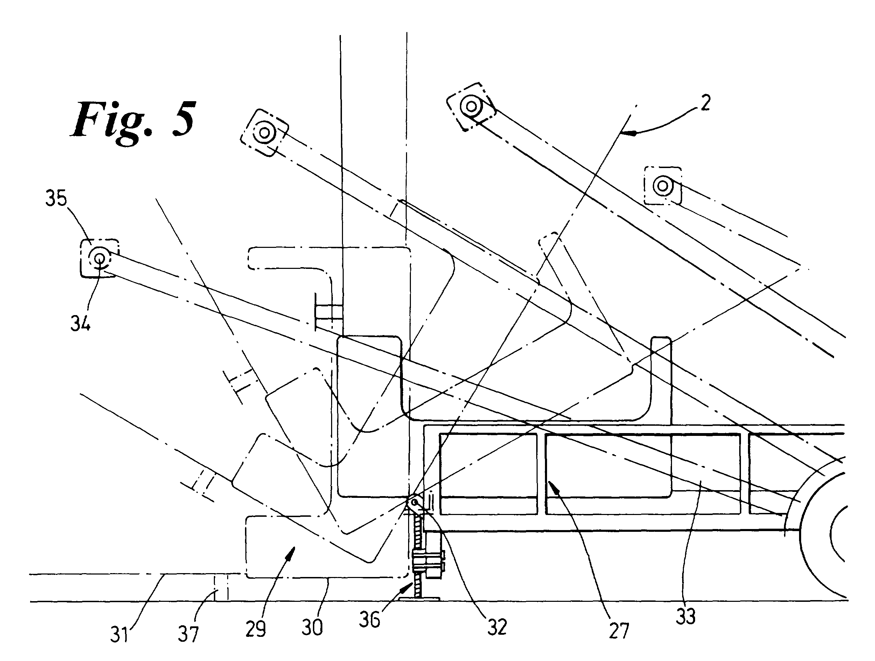

With reference to Figures 3 to 6, a wheeled trailer 25 for towing, behind a four-wheel-drive vehicle for example, comprises a base framework 26 and parallel side frames 27. A U-shaped cradle member 28 is fixedly carried by the front end of the base framework 26, and a rear U-shaped cradle member 29 is integral with a pivotable platform 30 which is engageable with that end 31 of the wall body 2 which is lowermost in use. The assembly of rearward cradle member 29 and platform 30 is pivoted about a transverse axis of the trailer by a suitable hinge rod 32.

A pair of tipping control arms 33 are adapted at their rear ends to be pivotally connected by releasable pivot pins 34 to respective pivot sockets 35 provided on the opposed side faces of the wall body 2 at positions spaced from the lower end 31. The front ends of the arms 33 are pivotally carried by respective slide bodies 26a which are guided for longitudinal sliding movement along the trailer base framework 26.

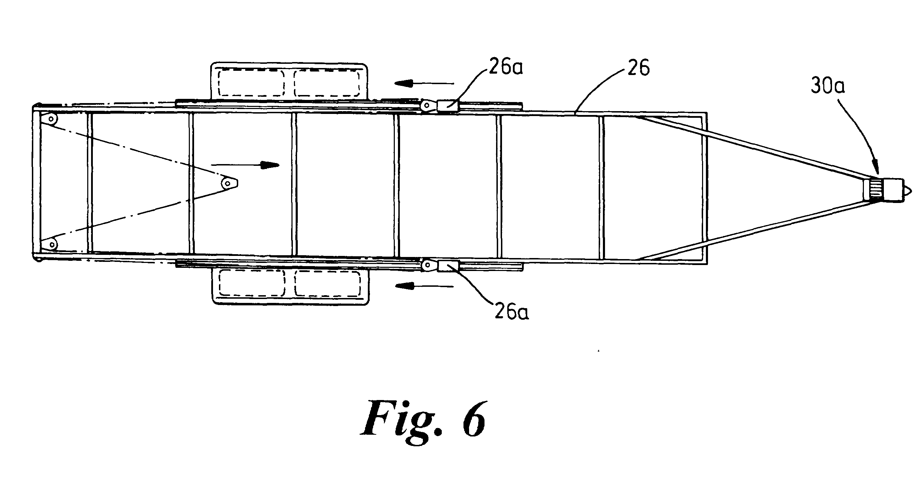

A system of pulleys and cables, as shown in Figure 6, enables the slide bodies to be winched, by winching means 30a, longitudinally of the framework 26 to cause the control arms 33 to pivot the platform 30 and cradle member 29, the pulley and cable system providing a mechanical advantage.

On arrival at the site at which the climbing frame assembly is to be deployed, a piece of substantially level and firm ground is identified, with no overhead power cables, and the trailer carrying the horizontally disposed wall body 2 is suitably positioned. The trailer wheels are braked or choked, and a pair of stabilising jacks 36 provided at the rear end of the trailer are engaged with the ground.

The control arms 33 are then urged rearwards by winching the slide bodies, conveniently with the winch provided on the rear of the four-wheel-drive vehicle, to cause the platform 30 and cradle member 29 to pivot, as depicted in Figure 3, until the wall body 2 is brought to a substantially vertical position, resting on three screw jacks 37 provided at the lower end 31 of the wall body 2.

The screw jacks 37 are mobile-home side-winding jacks engaged in sockets in the lower end 31 of the wall body 2.

Jacks 37 are raised to cause the wall body 2 to be lifted clear of the platform 30, in readiness for removal of the trailer, but the arm pivot pins 34 are left in place for the present to assist in stabilising the wall body 2 until the legs 17 have been secured in place.

The three ropes 16 for winching the legs were already in place in the column 6 prior to raising of the wall body 2 from the horizontal position. The leg halves were conveniently stored in the interior space of body 2 during transportation. Also, the unobstructed interior space can accommodate other associated equipment such as simulated boulders to provide climbing practice.

The leg halves are laid on the ground and socketed together after connection of the ropes 16 at 24, and then the ropes 16 can be hauled in turn to raise the respective legs and draw the leg noses upwards and into the respective sockets 21. A door in the lower side wall of the wall body 2 may be provided to enable the ropes 20 to be winched by means of an external winch, conveniently the winch of the towing vehicle. Of course, suitable rope guides will need to be provided on an inner surface of the wall body to redirect the ropes, and rope clamps are also desirably provided within the wall body 2.

Once all three legs have been raised into tripod configuration, the leg restraining straps previously described are connected to the legs and to the jacks 37, and the ratchet tensioners are actuated to draw the lower ends of the legs 17 towards one another and towards the wall body 2 so as to tension-up the entire assembly of legs 17, column 6 and wall body 2, so as to provide a very stable and sturdy climbing wall assembly.

Arms 33 are then detached by removal of pins 34, and the trailer can be driven clear of the climbing wall assembly, this being facilitated by the fact that two of the legs 17 span the trailer but do not interfere with its movement. This is arranged by suitable angular positioning of the leg sockets 21 relative to the wall body 2.

Disassembly of the climbing wall assembly, and remounting of the wall body on the trailer, is essentially the reverse of the procedure just described.

## Claims

1. A portable climbing wall assembly (1) comprising a wall body (2) adapted to be stood on end, and a plurality of external support legs (17) adapted to be connected to the upper end of the wall body (2) and to diverge downwardly and outwardly from one another.

2. A portable climbing wall assembly according to claim 1, in which the wall body (2) is of monocoque construction.

3. A portable climbing wall assembly according to either claim 1 or claim 2, in which the wall body (2) is of substantially tubular shape.

4. A portable climbing wall assembly (1) according to any preceding claim, in which the wall body (2) is of elliptical transverse cross-section.

5. A portable climbing wall assembly (1) according to any preceding claim, in which the external surface of the wall body (2) is furnished with a plurality of holds, which are so arranged as to provide routes of varying degrees of difficulty up the wall body (2).

6. A portable climbing wall assembly (1) according to claim 5, in which the external surface of the wall body (2) is further provided with suitable anchorages for the attachment of rope guides.

7. A portable climbing wall assembly (1) according to any preceding claim, in which three support legs (17) are provided and are arranged in use in a tripod configuration.

8. A portable climbing wall assembly (1) according to any preceding claim, in which adjustable ground-engaging feet (37) are provided on the lower end (31) of the wall body (2).

9. A portable climbing wall assembly (1), according to claim 8 in which the adjustable feet (37) are provided in the form of screw jacks.

10. A portable climbing wall assembly (1) according to any one of the preceding claims in which the upper ends (20) of the legs (17) are connected in use to the upper end of a column (6) which is rigid with the upper end of the wall body (2).

11. A portable climbing wall assembly (1) according to claim 10, in which the upper end of the body wall (2) is provided with a transverse end wall (4) to which the column (6) is secured.

12. A portable climbing wall assembly (1) according to claim 10 or claim 11, in which the column (6) is hollow to accommodate ropes or cables which are attached to the respective legs (17) for initially raising the legs (17) to an operative position.

13. A portable climbing wall assembly (1) according to claim 10, claim 11 or claim 12, in which the upper end (20) of each leg (17) is adapted to be received in a downwardly-facing socket (21) of a respective leg locating means forming part of the connection with the upper end of the wall body (2).

14. A portable climbing wall assembly (1) according to claim 13 in which a rope or cable is associated with each leg (17), and the rope or cable is arranged to extend through a bore (22) in the blind end of the socket (21), so that pulling on the rope or cable initially drags the leg upper end (20) into the respective socket (21).

15. A portable climbing wall assembly (1), according to any one of claims 10 to 14 in which the leg locating means are provided at the upper end of the column (6), and the cables or ropes are preferably guided from the socket bores (22), by respective pulleys (23), to extend downwardly within the column (6) and into the interior of the wall body (2).

16. A method of erecting a portable climbing wall assembly (1) in accordance with any of claims 1 to 11, the method comprising pivoting the wall body (2) from a substantially horizontal position to a substantially vertical position, and then erecting the support legs (17) by dragging with a respective rope or cable (16) the upper end of each leg to be received in a respective socket (21) in a leg locating means connected to the upper end of the wall body (2).

17. A method according to claim 16, in which the lower ends of the legs (17) are restrained against movement over the ground by suitable leg restraining means.

18. A wheeled vehicle (25) for transporting a portable climbing wall assembly (1), with an elongate wall body of the climbing wall assembly (1) supported in a substantially horizontal orientation, the vehicle comprising a cradle (28, 29) to support the wall body in said substantially horizontal orientation, the cradle (28, 29) comprising a tippable platform (30) adapted to support that end (31) of the wall body (2) which is lowermost in use of the climbing wall assembly (1), the vehicle (25) comprising tipping means for causing the wall body (2), whilst supported on said platform (30), to be tipped from said substantially horizontal orientation to a substantially vertical orientation.

19. A wheeled vehicle (25) as claimed in claim 18, in which the tipping means comprises a pair of control arms (33) adapted to be releasably secured at one end of the arms (33) to the wall body (2) at positions of the wall body (2) spaced from said lowermost end, and arm driving means (26a, 30a) is provided for driving the control arms relative to the chassis (26) of the vehicle so as to tip the wall body (2) progressively in a controlled manner to a substantially vertical position.
